# EUROPEAN PATENT SPECIFICATION

(11) **EP 3 358 713 B1**
(45) Date of publication and mention of the grant of the patent: **03.07.2019**
(21) Application number: 18154867.8
(22) Date of filing: 02.02.2018
(51) Int. Cl.: H02K 1/14, H02K 3/52, H02K 21/14

(54) **MOTOR**
MOTOR
MOTEUR

(30) Priority: 03.02.2017 KR 20170015377
(43) Date of publication of application: 08.08.2018
(73) Proprietor: LG Electronics Inc., Yeongdeungpo-gu Seoul 07336 (KR)
(72) Inventor: KIM, Jaeho, 08592 Seoul (KR); KAM, Byungkuk, 08592 Seoul (KR); PARK, Chisung, 08592 Seoul (KR); AHN, Jihyun, 08592 Seoul (KR)
(74) Representative: Vossius & Partner Patentanwälte Rechtsanwälte mbB

(56) References cited:
- EP-A1- 1 202 430
- JP-A- 2004 236 487
- JP-B2- 3 284 455
- US-A1- 2010 314 962
- US-A1- 2013 089 444
- US-A1- 2013 094 982

## Description

### CROSS-REFERENCE TO RELATED APPLICATIONS

This application claims priority to Korean Patent Application No. 10-2017-0015377 filed on February 3, 2017 in Korea.

### BACKGROUND OF THE DISCLOSURE

### Field of the Disclosure

Embodiments of the present disclosure relate to a motor, more particularly, a motor having an improved performance and a reduced manufacturing cost.

### Background of the Disclosure

Generally, a motor is configured to transmit a rotational force of a rotor to a shaft so that the shaft may drive a load. For example, the shaft may be connected to a drum of a washing machine and configured to drive the drum. The shaft may be connected to a fan of a refrigerator and configured to drive the fan to supply cold air to a space which needs the cold air. Also, the motor may be used in a compressor so as to compress a refrigerant.

Meanwhile, a rotor is rotatable in a motor by an electromagnetic interaction with a stator. For that, a coil is wounded around the stator and the rotor is rotatable with respect to the stator as an electric current is applied to the coil.

The stator includes a stator core and the stator core is made of a conductor. Also, the stator is usually a structure fixed to an object so that the fixing means for fixing the stator to an object such as a motor housing, a motor bracket or a tub of a washing machine may be required.

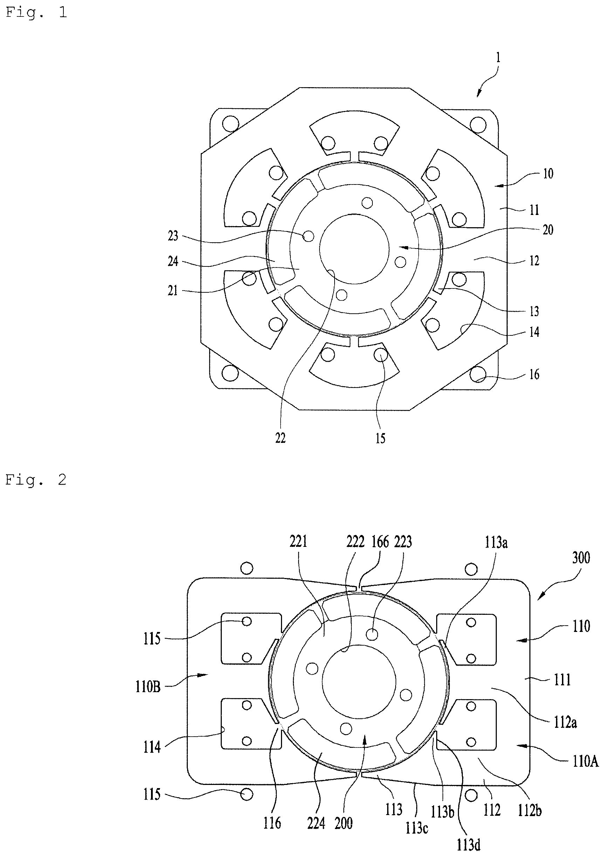

FIG. 1 illustrates a conventional 3-phase-4-polarity-6-slot motor.

The motor 1 includes a stator 10 and a rotor 20. The rotor 20 is provided in the stator and configured to be rotatable with respect to the stator.

The stator 10 may include a yoke 11; and a plurality of teeth 12 projected inwards from the yoke 11. A pole shoe 13 is extended from an inner radial end of the teeth 12 in both circumferential directions.

A slot 14 is formed between two teeth as a space where a coil 15 is wounded. The coil 15 is wounded around one of the teeth 12 to fill in both slots 14 located nearby.

The coil 15 is wounded to distinguish u-phase, v-phase and w-phase from each other so as to apply 3-phase AC to the motor. As one example, u-phase, v-phase and w-phase coils are alternatively wounded around the teeth along a circumferential direction.

A securing hole 16 may be formed in the yoke 11 to secure the stator 10 or the motor 1 to an object. Not to affect the magnetic flux, the securing hole 16 may be provided in the outermost area of the yoke 11.

The yoke 11 may be formed in a ring shape. As shown in the drawings, the yoke 11 may have a polygonal shape. In any shapes, the yoke 11 may be continuously formed along a circumferential surface. More specifically, a magnetic body forming the yoke may be provided along the circumferential surface.

Moreover, the teeth 12 may be continuously formed with the yoke 11. In other words, the teeth may be integrally formed with the yoke as one body so that the teeth 12 together with the yoke 11 may be referenced to as 'the stator core'. The stator core before the coil is wounded may have a uni-body structure.

The rotor 20 may include a ring-shaped rotor core 21. A shaft hole 22 may be formed in the center of the rotor core 21. The shaft is insertedly coupled to the shaft hole and the rotation of the rotor may generate the rotation of the shaft.

A plurality of coupling holes 23 may be formed in the rotor core 21 and steel plates are multi-layered via the coupling holes 23 to be coupled to each other.

A permanent magnet 24 may be provided in the rotor core 21. As one example, permanent magnets 24 may be provided in an outer circumferential surface of the rotor core 21 along the circumferential direction. N-poles and S-poles of the permanent magnets 24 may be alternatively magnetized along the circumferential direction. FIG. 1 shows that 4 permanent magnets are magnetized into N-poles and S-poles along the circumferential direction alternatively.

The motor having the permanent magnets provided in the rotor core 210 is 'BLDC motor'. As the permanent magnets are provided in the rotor core 21, the performance of the motor may be improved and the control of the motor may be performed precisely.

The motor having such the stator type have several points of improvement.

First of all, the yoke 11 is provided as the integral part and the stator core including the teeth 12 and the yoke 11 is also provided as the integral part. Accordingly, the area of the slot is small it is limited to increase the number of coil turns and diameters. The wire loss generated in the coil is relatively large so that it can be difficult to increase efficiency.

Furthermore, the winding work of the coil has to be performed by using a nozzle. Accordingly, the fill factor cannot help decreasing and the winding workability has to be deteriorated inevitably.

Still further, it is difficult to change the external appearance and size of the stator core and it is limited to reduce the use of the material in fabricating the stator core. Accordingly, the shape or size of the stator core can be changed minutely in the conventional motor but it is difficult to try to reduce the use of the stator core material noticeably.

US 2010/314962 (A1) relates to an inner rotor-type three-phase brushless DC motor in which a rotor provided with a magnet is arranged at center side and a stator is arranged at outside of the rotor.

US 2013/094982 (A1) relates to a brushless motor and an electric pump.

EP 1 202 430 (A1) relates to brushless motor that comprises stators being formed into flat shapes, in which ends of teeth of the stators are formed into arc surfaces along a rim of a rotor and teeth-winding parts are formed in parallel with each other.

US 2013/089444 (A1) relates to a brushless motor that includes a rotor and a stator.

JP 2004 236487 (A) provides a brushless motor of a flat structure that can prevent the reduction of a motor output and reduce cogging torque and vibrations.

### SUMMARY OF THE DISCLOSURE

Accordingly, an object of the present invention is to address the above-noted and other problems which are solved by the motor as claimed by the independent claim.

Embodiments of the present disclosure may provide a stator, which may increase the number of coil turns and diameters and improve motor efficiency by reducing the wire loss generated in the coil, and a motor including the stator.

Embodiments of the present disclosure may also provide a stator which facilitates the winding work of the coil and improves the fill factor, and a motor including the stator.

Embodiments of the present disclosure may also provide a stator which may raise the output intensity by reducing the size with respect to the same output, and a motor including the stator.

Embodiments of the present disclosure may also provide a stator which has a high freedom of a gap design (the gap with a rotor) by dividing of a stator core, and a motor including the stator.

Embodiments of the present disclosure may also provide a stator which may be connected with diverse types of a rotor, and a motor including the stator.

Embodiments of the present disclosure may also provide a stator which may minimize a magnetic flux passage by reducing an unnecessary area of a yoke and reduce the manufacturing cost by reducing the material use in fabricating the stator core, and a motor including the stator.

Embodiments of the present disclosure may also provide a motor comprising a first stator core; and a second stator core independently provided from the first stator and formed in right and left symmetry with respect to the first stator core, wherein each of the first and second stator core comprises a yoke; center teeth extended from a vertical center of the yoke toward a center of a stator; and outer teeth extended from upper and lower ends of the yoke longer than the center teeth.

The first stator core and the second stator core may be divided and independently formed by corresponding divided yokes.

A center tooth pole shoe may be extended from one end of the center tooth to both circumferential sides, and an outer tooth pole may be formed to connect a long distance area extended a long distance from an outer end of the outer tooth and a short distance area extended a short distance from an inner end of the outer tooth with each other. because of such a length difference between the long distance area and the short distance area, the outer tooth pole shoes may be formed in asymmetry

A rotor may be provided in a center of the stator core, and the circumferential length of the center tooth pole shoe facing the rotor may be equal to the circumferential length of the outer tooth pole shoe facing the rotor.

The rotor may be 4-magnetic-polarity rotor and the rotor may include four permanent magnets in which N-pole and S-pole are alternatively magnetized. The permanent magnets may be arranged in an outer surface of the rotor or inside the rotor.

The permanent magnets may be ferrite magnets or Nd magnets.

An angle formed between the long distance area and the short distance area may be smaller than 90 degrees. Accordingly, the long distance area is extended from a linear area of the outer tooth at a gentle angle. The short distance area is extended at a relatively a large angle.

An angle formed between the teeth and the short distance area may be 90 degrees and an angle formed between the teeth and the long distance area may be smaller than 180 degrees.

The long distance area and the short distance area may be formed linearly. Alternatively, they may be curved partially or entirely.

A slot may be formed between the center tooth and the outer tooth, and a slot opening may be formed between the center tooth pole shoe and the outer tooth pole shoe, and the circumferential-direction width of the slot opening may be smaller than the widths of the center and outer teeth.

A line connecting a center of the slot opening and a center of the stator core with each other may not be overlapped with an inner surface of the yoke forming the slot. Accordingly, the length between an area adjacent to the slot opening and the yoke may be increased more enough to minimize leakage flux between them.

The first stator core and the second stator core may be in vertical symmetry. Accordingly, the first stator core and the second stator core may be the same elements or components. Accordingly, they may be processed as one component in the production or treatment.

A longitudinal direction of the yoke may be perpendicular to an extension direction of the center and outer teeth. The yoke may be formed in a linear shape and the teeth may be extended in a linear shape which is perpendicular to the yoke.

The slot area determined by the length and width of the slot formed inside the outer tooth may be equal to the slot area determined by the length and width of the slot formed in the center tooth.

The ratio of the length of the slot to the height of the slot formed in the center tooth may be larger than the ratio of the length of the slot formed inside the outer tooth to the width of the slot.

The ratio of the length of the slot to the width of the slot formed inside the outer tooth may be 0.27∼0.33.

The ratio of the length of the slot to the width of the slot formed in the center tooth may be 0.55∼0.67.

The ratio of the right-and-left width to the vertical width of the stator core may be 0.55∼0.65.

A 3-phase coil may be wounded around the center teeth and the outer teeth along a circumferential direction sequentially. Accordingly, six teeth may be formed and a u-phase, a v-phase and a w-phase may be wounded around the six teeth sequentially.

The right-and-left width of the stator core may be longer than the vertical width of the stator core corresponding to the length of the first stator core and the length of the second stator core.

The ratio of the right-and-left width to the vertical width of the stator core maybe 0.55∼0.65.

The width of the outer tooth may be equal to or longer than the width of the yoke.

The ratio of the width of the outer tooth to the width of the yoke may be 0.8 ∼1.

The width of the center tooth may be equal to or longer than the width of the outer tooth.

The ratio of the width of the center tooth to the width of the outer tooth may be 0.95∼1.

The yoke, the center teeth and the outer teeth may be integrally formed with each other. The first stator core and the second stator core may be formed as one body.

The yoke, the center teeth and the outer teeth may be fabricated independently. After the center teeth and the outer teeth are inserted in the bobbins the coils are wounded around, the center teeth and the outer teeth may be coupled to the yoke.

The coupling of the center and outer teeth to the yoke may be performed by the coupling of the projection to the groove. The projections and grooves may be located in an outer surface of the bobbin and an inner surface of the yoke.

Embodiments of the present disclosure may also provide a motor comprising a stator comprising a stator core and a coil wounded around the stator core; and a rotor rotatable in the stator, wherein the stator core comprises a first stator core; and a second stator core independently provided from the first stator and formed in right and left symmetry with respect to the first stator core. Each of the first and second stator core comprises a yoke; center teeth extended from a vertical center of the yoke toward a center of a stator; outer teeth extended from upper and lower ends of the yoke longer than the center teeth; a center tooth pole shoe extended from one end of the center tooth to both circumferential sides; an outer tooth pole shoe formed to connect a long distance area extended a long distance from an outer end of the outer tooth.

A slot may be formed between the center tooth and the outer tooth, and a slot opening may be formed between the center tooth pole shoe and the outer tooth pole shoe, and the circumferential-direction width of the slot opening may be smaller than the widths of the center and outer teeth. A line connecting a center of the slot opening and a center of the stator core with each other may not be overlapped with an inner surface of the yoke forming the slot.

The slot opening may be formed between the outer tooth pole shoes and a line connecting the center of the slot opening the center of the stator core with each other may not be overlapped with the yoke. Especially, no yoke may be provided on the line.

The center teeth and the outer teeth may be extended in parallel.

Further scope of applicability of the present invention will become apparent from the detailed description given hereinafter.

According to the embodiments of the present disclosure, the stator, which may increase the number of coil turns and diameters and improve motor efficiency by reducing the wire loss generated in the coil.

Furthermore, the stator is capable of facilitating the winding work of the coil and improves the fill factor.

Still further, the stator is capable of raising the output intensity by reducing the size with respect to the same output.

Still further, the stator may have a high freedom of a gap design (the gap with a rotor) by dividing of a stator core.

Still further, the stator may be connected with diverse types of a rotor and the motor includes the stator.

Still further, the stator is capable of minimizing a magnetic flux passage by reducing an unnecessary area of a yoke and noticeably reducing the manufacturing cost by reducing the material use in fabricating the stator core and the motor includes the stator.

However, it should be understood that the detailed description and specific examples, while indicating preferred embodiments of the invention, are given by illustration only, since various changes and modifications within the scope of the invention as defined by the appended claims will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a plane view schematically illustrating a conventional motor;
FIG. 2 is a plane view schematically illustrating a motor in accordance with one embodiment of the present disclosure;
FIG. 3 is a plane view of a stator core shown in FIG. 2;
FIG. 4 is a perspective diagram illustrating that both teeth and a yoke of a first stator core are separated from a bobbin;
FIG. 5 is a perspective diagram that the first stator core and the bobbin are coupled to each other;
FIG. 6 is a diagram of a magnetic flux of the motor shown in FIG. 1;
FIG. 7 is a diagram of a magnetic flux of the motor shown in FIG. 2;
FIG. 8 is a plane view illustrating one example of a rotor which may be applied to one embodiment of the present disclosure; and
FIG. 9 is a plane view illustrating another example of the rotor which may be applied to one embodiment of the present disclosure.

### DESCRIPTION OF SPECIFIC EMBODIMENTS

Hereinafter, a motor in accordance with one embodiment of the present disclosure will be described in detail, referring to the accompanying drawings.

FIG. 2 is a plane view schematically illustrating a motor in accordance with one embodiment of the present disclosure.

The motor 300 may include a stator 100 and a rotor 200.

The rotor 200 may include a rotor core 221 formed as a magnetic body.

The stator core 110 and the rotor core 221 may form a magnetic flux passage. Electric steel plates are disposed to form the stator core 110 and the rotor core 221 so that the core wire loss may be reduced.

A shaft hole 222 and a coupling hole 223 may be formed in the rotor core 221. A plurality of magnets 224 may be also provided in the rotor core 221. Accordingly, the rotor shown in FIG. 2 may be equal to the rotor shown in FIG. 1. However, the rotor of the motor in accordance with embodiments of the present disclosure is not limited thereto and diverse types of rotors may be applied to the motor in accordance with the embodiments.

The stator 100 may include a coil 115 configured to be wounded around the stator core 110.

The stator 110 in accordance with the illustrated embodiment includes a first stator core 110A and a second stator core 110B which are dividedly distinguished from each other. As mentioned above, the stator core is the magnetic flux passage. Accordingly, the first stator core 110A and the second stator core 110B are separated from each other so that a continuous magnetic flux may not be formed between them.

Of course, the divided stator cores 100 and the rotor 200 may form one motor so that a predetermined structure for connecting them with each other as one motor can be necessary. As one example, a motor mount or a motor housing may be provided. The stator 100 may be mounted in the motor mount or the motor housing and the rotor 200 may be inserted in the stator 100, only to form one single motor.

As shown in FIG. 1, a stator of a conventional motor includes a ring-shaped yoke. The yoke is provided to cover the rotor 360 degrees fully. However, the yoke of the stator core in accordance with the illustrated embodiment is partially formed along a circumferential direction. As one example, the yoke is formed in a left side of the stator core via the first stator core 110A and in a right side via the second stator core 110B. Accordingly, no yoke may be provided in an upper side and a lower side with respect to the rotor.

In this instance, upper, lower, left and right sides are determined based on a plane of the motor 100 shown in FIG. 2 for convenience sake.

The first stator core 100a and the second stator core 200b may be formed in symmetry. The two stator cores are equal in the size and shape so that it is preferred that they are made of one same element. As shown in FIG. 2, the first stator core 100 and the second stator core 200 are named after the location and they are formed identically.

Hereinafter, the first stator core 100a will be described in detail. The description may be applied to the second stator core 100b, too.

The first stator core 110A may include the yoke 111, the plurality of the teeth 112; and a pole shoe 113 provided in each end of the teeth.

The plurality of the teeth 112 are projected from the yoke 111 inwardly to an inside of the stator core 111. The plurality of the teeth 112 may include center teeth 112a and outer teeth 112b. The outer teeth 112b may be provided in upper and lower areas of the center teeth, respectively.

The center teeth 112b may be extended from a longitudinal center of the yoke toward the stator or a center of the stator core. The stator or the center of the stator core may be equal to the center of the motor or the center of the rotor.

The outer teeth 112b may be extended from an upper end and a lower end of the yoke 111 longer than the center teeth. In other words, the outer teeth 112b may be longer than the center teeth 112a.

Each of the center and outer teeth 112a and 112b may have a linearly extended area. Specifically, the center teeth 112a and the outer teeth 112b may be linearly extended, except both ends of each center and outer teeth. The coil is wounded around the linearly extended area, in other words, the 3-phase coil may be wounded around each of the teeth sequentially.

A center teeth pole shoe 113a is formed in an end of the center tooth. The pole shoe 113a may be extended from the end of the center tooth 112a in both opposite directions along the circumferential direction. Two surfaces of the pole shoe 113a which faces the rotor 200 may define a gap of the motor.

The yoke 111 may be located in a predetermined area of the rotor 200 and it is extended from a longitudinal center upwards and downwards. The yoke 111 may be extended in a linear or curved shape. In case the yoke 111 is extended in the curved shape, a curvature radius of the yoke 111 may be larger than a curvature radius of the rotor. Accordingly, a distance from the longitudinal center of the yoke 111 to the center of the rotor may be farther than a distance from the upper and lower ends of the yoke 111 to the center of the rotor.

A surface which faces the rotor 200 has to be formed not only in the center tooth 112 but also the outer tooth 112b. It is preferred that an outer tooth pole shoe is formed. To form the outer tooth pole shoe 113b, the extended area of the center tooth 112a, in other words, the center tooth 112, may be longer than the extended area of the outer tooth 112b, in other words, the outer tooth 112b.

Meanwhile, both sides of the pole shoe 113 formed in the center tooth 112a may be identically formed or substantially equal to each other. In contrast, both sides of the outer tooth pole shoe 113b may be different from each other, because a distance between an inner end of the outer tooth 112b and the center of the rotor is different from a distance between an outer end of the outer tooth 112b and the center of the rotor. In other words, the former distance is farther than the latter distance.

Accordingly, to form the outer tooth pole shoe 113b may be formed a long distance area 113c extended a long distance from the outer end of the outer tooth 112b and a short distance area 113d extended a short distance from the inner end of the outer tooth 112b.

The area of the center tooth 112a corresponding to the long distance area is substantially equal to the area corresponding to the short distance area. Both sides of the center tooth pole shoe 113a may be in symmetry with respect to the center of the tooth. In contrast, both sides of the outer tooth pole shoe 113b may be in asymmetry with respect to the center of the tooth because of the difference between long distance area and the short distance area.

A slot 114 is formed between the center tooth 112a and the outer tooth 112b. The slot may be the space where the coil 115 is wounded. A slot 114 is also formed in an outer portion of the outer tooth 112b. The slot formed in the outer portion of the outer tooth 112b is different from the slot formed in an inner portion of the outer tooth 112b. More specifically, the latter slot is the substantially closed space and the former slot is the substantially open space.

Meanwhile, a slot opening 116 is formed between the center tooth pole shoe 113a and the outer tooth pole shoe 113b. Also, a slot opening 116 is formed between one outer tooth pole shoe 113b and another neighboring outer tooth pole shoe 113b.

FIG. 2 shows total 6 teeth. The 3-phase coil is wounded around each of the teeth. As one example, a w-phase coil is wounded around a right upper outer tooth and a v-phase coil is wounded around a left center tooth and a u-phase coil may be wounded around a left upper outer tooth.

To have 3-phase magneto-motive force equilibrium, each coil may have the same number of the coil turns (the number of windings) and the same pole shoe length. Also, each coil may have the same fill factor of each slot.

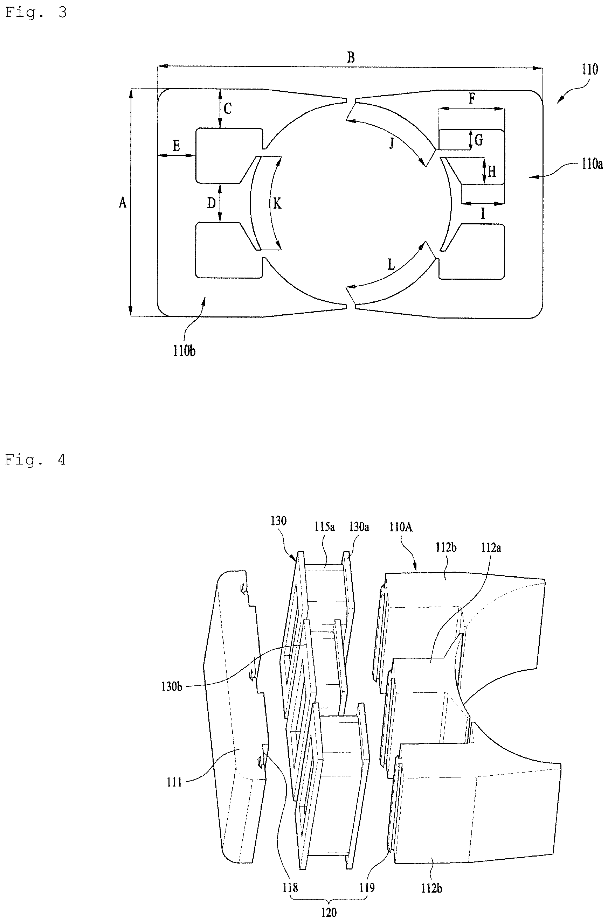

Following design variables may be put into consideration to satisfy 3-phase magneto-motive force equilibrium, referring to FIG. 3.

The tooth-length has to be put into consideration. The tooth-length means the length of the center tooth 112a and the length of the outer tooth 112b. More specifically, the tooth-length is the extended length from the yoke 111, except the area corresponding to the pole shoe. The tooth 112b length shown in FIG. 3 is referenced to as 'F' and the length of the center tooth 112a is referenced to as 'I'. In this embodiment, the long distance area 113a and the short distance area 113d are formed in the outer tooth 112a so that a difference between the inner length and the outer length of the outer tooth 112b which is generated by a difference between the lengths of the long distance area 113a and the short distance area 113d may be put into consideration. Considering the length to the pole shoe, one teeth-length is formed in the center tooth 112a and two teeth-lengths are formed in the outer tooth 112b. Accordingly, there are three variables of the tooth-length in this embodiment.

The tooth-length is an important variable in determining the size of the motor. As the tooth-length becomes increasing more and more, the right-and-left length of the motor becomes increasing more and more. As the tooth-length is varied, an inner diameter of the stator, the slot area, and the pole shoe length may be varied. Accordingly, the tooth-length has a close relation with the motor efficiency as the magnetic flux passage.

The yoke-length has to be put into consideration. The yoke-length means the vertical length of the yoke. In FIG. 3, the yoke-length is referred to as 'A'. The yoke-length is also another important variable in determining the size of the motor. As the tooth-length becomes increasing more and more, the vertical length of the motor becomes increasing more and more. The yoke-length may determine the slot area by the interaction with the width of the tooth. Also, the yoke-length means the length as the magnetic flux passage so as to have a close relation with the motor efficiency.

The pole shoe length has to be put into consideration. The pole shoe may determine the pitch of the polarity as the magnetic flux passage generated between the stator and the rotor. In FIG. 3, the pole shoe length is referred to as 'J', 'K' and 'L'. A waveform of a counter electro-motive force may be in asymmetry when the lengths of the both sides are imbalanced. In this embodiment, it is preferred that the pole shoe lengths of the teeth are equal to each other to have the 3-phase electro-motive force equilibrium. In other words, J, K and L may be equal to each other.

The tooth-width has to be put into consideration. The tooth-length means the size of the space as the magnetic flux passage. Accordingly, the tooth-length has to be designed, considering the saturated magnetic flux density. In FIG. 3, the tooth-width is referred to as 'C' and 'D'. The tooth-width is related with the core loss. As the tooth-width becomes increasing more and more, the core loss becomes decreasing and the slot area becomes increasing. Accordingly, the tooth-width has to be determined, considering the saturated flux intensity and the slot area.

The yoke-width has to be put into consideration. The yoke is the passage of the magnetic flux from the teeth and the yoke-width means the size of the space as the magnetic flux passage. Accordingly, the yoke-width has to be determined, considering the tooth-width. In FIG. 3, the yoke-width is referred to as 'E'.

Meanwhile, the right-and-left width of the stator core is referred to as 'B' in FIG. 3. Accordingly, the size of the motor may be determined based on a value which is gained by multiplying the vertical width of the stator core by the right-and-left width of the stator core. In other words, the amount of the material is determined by the stator core.

The right-and-left width and the vertical width of the stator core shown in FIG. 1 may be 106mm and 111mm, respectively. The right-and-left width and the vertical width of the stator core in accordance with this embodiment may be 116mm and 69mm. accordingly; the area of the stator core in accordance with this embodiment may be 68% of the area of the conventional stator core. That means that the amount of the electric plates used in fabricating the stator core can be noticeably reduced. Accordingly, the motor manufacturing cost may be noticeably reduced.

Hereinafter, the relations among the variables for the 3-phase electro-motive force equilibrium by the winding of the 3-phase coil around the stator core will be described in detail.

The ratio of B as the right-and-left width of the stator core to A as the vertical width of the stator core may be approximately 0.55∼0.66. The raise of the ratio means getting closer to the stator core shown in FIG. 1 substantially. The lowering of the ratio means that the slot area is reduced and that it is difficult to satisfy the 3-phase electro-motive force equilibrium under and over the stator core.

The ratio of C as the width of the outer tooth 112b to E as the yoke width may be approximately 0.8∼1. In other words, it is preferred that the width of the outer tooth 112b is equal to or larger than the yoke width. The ratio of D as the center tooth width to C as the outer tooth width may be approximately 0.95∼1. In other words, it is preferred that the width of the center tooth 112a is equal to or a little larger than the width of the tooth.

In this instance, the width of the outer tooth 112b is equal to the width of the center tooth to make the magnetic flux flowing to each of the teeth equal to each other. However, the width of the center tooth is somewhat larger than the width of the center teeth so as to prevent the magnetic flux saturation in the center tooth. Accordingly, the ratio of the outer tooth to the width of the center tooth may be approximately 0.95∼1.

Moreover, the outer tooth may be relatively longer than the center tooth in a lineal length. As the outer tooth becomes longer and longer, the wire loss may become increasing more and more. Accordingly, the width of the outer tooth may be larger than the width of the yoke to compensate the wire loss. If the yoke width is larger than the outer tooth width, the yoke width is unnecessarily increasing. It means that the amount of the material is increased unnecessarily. While, if the yoke width is much smaller than the width of the outer tooth, magnetic flux saturation might be generated in the yoke. Accordingly, the ratio of the outer tooth width to the yoke width may be approximately 0.8∼1.

Meanwhile, the slot area of the coil winding around each of the teeth has to be equal as mentioned above. The areas of the slots formed in both sides with respect to the center tooth 112a are equal to each other, because the center tooth is in symmetry. Accordingly, the area of the slot formed with respect to the center tooth 112a may be equal to the area of the slot formed in the outer tooth 112b, especially, inside the outer tooth.

As mentioned above, the linear length of the outer tooth is larger than that of the center tooth. The linear length may determine the area of the slot. If such the linear distance is the right-and-left width of the slot, the vertical length determine by the pole shoe may be the height of the slot. Accordingly, the height of the slot formed in the center tooth may be larger than that of the slot formed in the outer tooth.

More specifically, the slot formed in an outer portion of the outer tooth 112b is the completely open space so that the area of the slot may not meaningful a lot. While, the slot formed in the outer tooth 112b is a substantially closed space so that the height of the slot may be determined by the height of the short distance area 113d.

The shape difference between the outer tooth and the center tooth may versatility of the slot. In this instance, the slot areas may be equal to each other.

For that, the ratio of F as the length of the slot formed in the outer tooth to G as the height of the slot in the outer tooth may be approximately 0.27∼0.33. The ratio of I as the length of the slot formed in the center tooth to H as the height of the slot formed in the center tooth may be approximately 0.55∼0.67. In other words, the latter ratio may be higher than the former ratio. On the premise that the slot areas are equal to each other, the slot lengths are different from each other and then the slot heights become different from each other.

The more rise of the ratios means that the stator core 110 is formed longer horizontally or in a right and left direction. Especially, it means that the lengths of the teeth are increased more. Accordingly, it is difficult to form the 3-phase electro-motive force equilibrium. In addition, the more fall-down of the ratios means that the stator core 110 becomes closer to the structure shown in FIG. 1. Accordingly, the intended effects and objects are difficult to achieve.

As mentioned above, the embodiment disclosing that the coil is directly wounded around the teeth is described. Hereinafter, another embodiment disclosing that the coil is wounded by using a bobbin will be described.

A bobbin 130 for winding the coil may be independently provided from the teeth. After the coil is wounded around the bobbin 130, each of the teeth may be inserted in the bobbin. For that, the teeth and the yoke are fabricated as independent parts and coupled to each other.

Such the bobbin may be applied to the conventional stator shown in FIG. 1. In other words, after each of the teeth is inserted in the bobbin, the bobbin may be coupled to the ring-shaped yoke. However, in this instance, six teeth have to be secured to the relatively large sized ring-shaped yoke so that workability may not be so excellent. When the yoke is secured to the teeth by using a device, the device has to be complicated and large-sized and the number of the teeth is large so that the device may become complicated and enlarged.

In contrast, the yoke in accordance with this embodiment is relatively small and formed in a simple shape. The number of the teeth secured to one yoke may be reduced to a half so that the coupling device may be simple and small. Accordingly, the coupling process between the yoke and the teeth may be performed quite efficiently and smoothly. That is because the stator core is divided into the right and left stator cores and the first stator core and the second stator core are identically formed.

Meanwhile, when the coil is wounded by using the bobbin 130, the entire slot area may be used and it means that the fill factor can be improved a lot. Accordingly, the highly efficient motor can be provided.

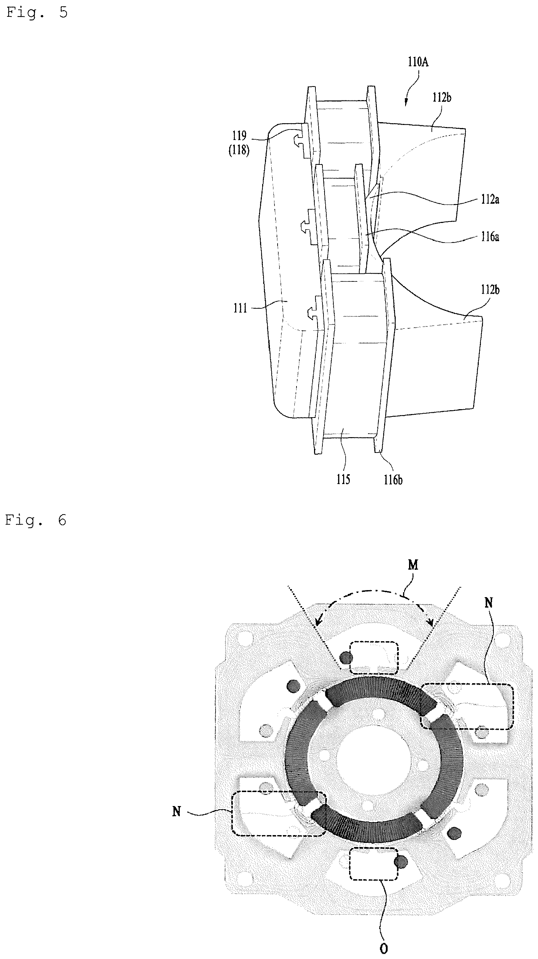

As shown in FIGS. 4 and 5, the yoke 111, the bobbin 130 and the teeth 112 are formed as independent parts and then coupled to each other. Of course, each of the coils may be wounded around the bobbin 130.

Each of the teeth may be inserted in the bobbin 130 having the coils wounded there around. In other words, the linear length area of the tooth may penetrate the bobbin. The length of the tooth may be extended more, penetrating the bobbin. A securing area 119 may be formed in one end of each tooth.

Corresponding to the coupling areas 119 of each tooth, a coupling area 118 may be formed in the yoke 111. The two coupling areas may be formed in corresponding shapes. One of them may be a groove type and the other may be a projection. After the two coupling areas are coupled to each other, a welding process is performed and the coupling may be more stable.

In this instance, the two coupling areas may be an outer area of the bobbin 130 so as to couple the teeth to the yoke smoothly after the bobbin 130 is coupled to each of the teeth. Such the coupling areas are substantially corresponding to the yoke 111. In other words, one side of the bobbin may closely contact with the yoke and the other side with the pole shoe, so that the width of the bobbin can be equal to the length of the tooth substantially. As the length of the outer tooth is different from that of the center tooth, the bobbin 130a in which the outer tooth is inserted may be different from another bobbin 130b in which the center tooth is inserted.

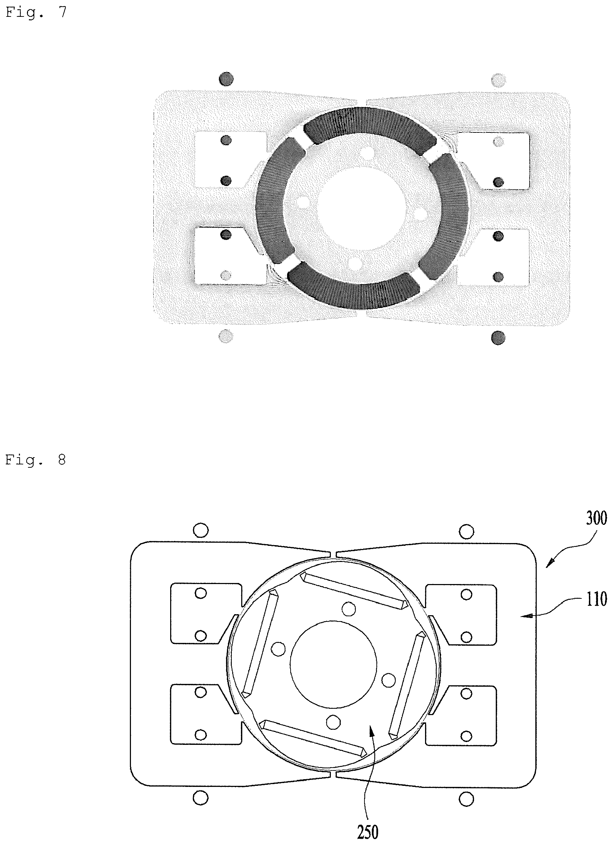

Hereinafter, the effects of the motor in accordance with one embodiment of the present disclosure will be described in detail, referring to FIGS. 6 and 7.

FIG. 6 is a diagram of a magnetic flux of the motor shown in FIG. 1 and FIG. 7 is a diagram of a magnetic flux of the motor shown in FIG. 2.

It is shown that little magnetic flux is generated in the conventional stator core in M-section. It is known that such M-section may be symmetrically generated in the stator core. Accordingly, it can be know that the stator core corresponding to this period is irrelevant to the performance of the motor.

Leakage flux may be generated in the slot opening arranged in the M-period, which is indicated as 'O' in the drawing. A magnetic flux passage is formed between neighboring pole shoes and such a magnetic flux passage could be a leakage flux as the cause of the motor performance deterioration.

Leakage flux may be also generated in N-area. The leakage flux might be generated between one pole shoe adjacent to the slot opening and a neighboring yoke, which means that the magnetic flux generated in the yoke fails to flow via the teeth but directly flows to the pole shoe only to cause the deterioration of the motor performance. It can be said that such the leakage flux is generated, because the distance between the pole shoe and the yoke is relatively short.

In contrast, the magnetic flux is generated in almost entire area of the stator core in accordance with this embodiment only to omit the unnecessary parts. As such the unnecessary parts are omitted, the leakage flux generated in the slot opening may be minimized.

Moreover, in the illustrated embodiment, no yoke corresponding to the slot opening arranged between the outer teeth. In other words, the unnecessary yoke may be omitted so as to generate no magnetic flux leakage between the yoke and the slot opening.

Also, the magnetic leakage generated between the yoke and the slot opening between the outer tooth and the center tooth may be minimized. More specifically, the slot may be in right and left asymmetry with respect to a line from the center of the slot opening and the center of the rotor. The line and the inside of the yoke are not overlapped with each other. In other words, the distance between the slot opening and the yoke inside may be relatively increased so that the magnetic flux directly flowing to the slot opening from the yoke may be remarkably reduced.

Accordingly, this embodiment may reduce the leakage flux by minimizing the magnetic flux passage and improve the output intensity.

Meanwhile, the motor in accordance with this embodiment may use diverse types of rotors. Not only SPM (Surface Permanent Magnet) rotor shown in FIG. 1 but also other types of rotors may be used in the motor.

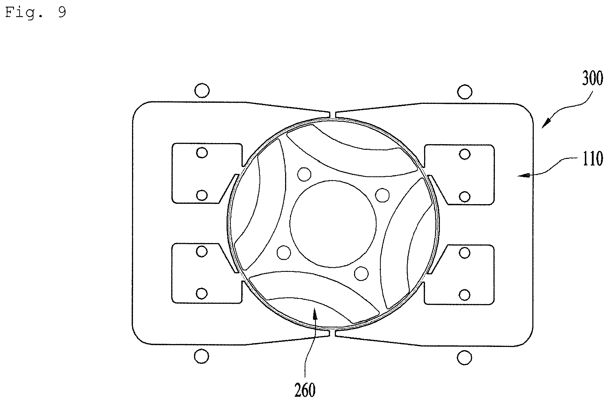

FIGS. 8 and 9 illustrate an IPM (Interior Permanent Magnet) rotor. Permanent magnets are not arranged on an outer surface of the rotor and in an inner surface of the rotor. The IPM rotor uses Nd (Neodymium) magnets or ferrite magnets as the permanent magnets. The two types of the rotors are different from each other in the shape and size. Typically, the SPM rotor uses the ferrite magnets.

While, the SPM rotor uses only a magnetic torque which is generated by the permanent magnets, the IPM rotor uses not only the magnetic torque but also a reluctance torque which is generated by a difference of magnetic resistances. Accordingly, the manufacturing cost of the IPM rotor is increased and the range of operation areas may be wider.

As a result, the rotor applied to the motor in accordance with this embodiment may be diverse. The motor in accordance with this embodiment is substantially characterized in the stator core.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A motor comprising:
a first E-shaped stator core (110A); and
a second E-shaped stator core (110B) independently provided from the first stator core (110A),
wherein each of the first and second E-shaped stator cores (110A, 110B) comprises,
a yoke (11) extended in a yoke length direction;
a center tooth (112a) extended in a tooth extension direction from a center of the yoke (11); and
two outer teeth (112b) extended in a tooth extension direction from upper and lower ends of the yoke (11), respectively, the outer teeth (112b) being longer than the center teeth (112a),
wherein the center teeth (112a) and outer teeth (112b) form a cylindrical opening suitable for accommodating a ring shaped rotor core (21) between the first and the second E-shaped stator core (110A, 110B), wherein the rotor rotates around an axis and,
wherein a center tooth pole shoe (113a) is formed in an end of the each center tooth (112a) and is extended from the end of the center tooth (112a) in both opposite circumferential directions,
wherein an outer tooth pole shoe (113b) is formed in an end of the each outer tooth (112b) and is extended from the end of the outer tooth (112b) in both opposite circumferential directions,
wherein the yoke (11) is perpendicular to the tooth extension direction of the center and outer teeth (112a, 112b), and
the center and outer teeth (112a, 112b) are extended linearly, and a slot (114) is formed between the center tooth (112a) and the outer tooth (112b) in an outer surface of the outer tooth (112b),
**characterized in that**
a ratio (G/F) of a height (G) to a length (F) is 0.27∼0.33,
wherein the length (F) is defined as the length in the tooth extension direction of the outer tooth (112b) between the yoke (11) and the pole shoe (113b) and the height (G) is defined as the height in the yoke length direction of a polar extension of the outer tooth pole shoe (113b) that extends from the outer tooth (112b) towards the center tooth (112a), and/or
a ratio (H/I) of a height (H) to a length (I) is 0.55∼0.67,
wherein the length (1) is defined as the length in the tooth extension direction of the center tooth (112a) between the yoke (11) and the pole shoe (113a), and
the height (H) is defined as the height in the yoke length direction of a polar extension of the center tooth pole shoe (113a) that extends from the center tooth (112a) towards the outer tooth (112b).

2. The motor of claim 1,
wherein the outer tooth pole shoe (113b) is formed to connect a long distance area extended a long distance from an outer end of the outer tooth (112b) and a short distance area extended a short distance from an inner end of the outer tooth (112b) with each other,
wherein the long distance area is defined as a polar extension of the outer tooth pole shoe (113b) that extends from a first outer tooth (112b) towards a second outer tooth (112b) of the E-shaped stator core (110A, 110B) facing the first outer tooth (112b), and
wherein the short distance area is defined as a polar extension of the center tooth pole shoe (113a) that extends from the outer tooth (112b) towards the center tooth (112a).

3. The motor of claim 2, wherein a rotor (200) is provided in a center of the first and second E-shaped stator core (110A, 110B), and
a circumferential length of the center tooth pole shoe (113a) facing the rotor (200) is equal to a circumferential length of the outer tooth pole shoe (113b) facing the rotor (200).

4. The motor of claim 2 or 3, wherein an angle formed between the long distance area and the short distance area is smaller than 90 degrees, and
an angle formed between the teeth and the short distance area is 90 degrees, and
an angle formed between the teeth and the long distance area is smaller than 180 degrees.

5. The motor of any one of claims 2 through 4, wherein a slot (114) is formed between the center tooth (112a) and the outer tooth (112b), and
a slot opening (116) is formed between the center tooth pole shoe (113a) and the outer tooth pole shoe (113b), and
a circumferential-direction width of the slot opening (116) is smaller than the widths (D, C) in the yoke length direction of the center and outer teeth (112a, 112b).

6. The motor of claim 5, wherein a line connecting a center of the slot opening (116) and a center of the motor with each other is not overlapped with an inner surface of the yoke (11) forming the slot (114).

7. The motor of any one of claims 1 through 6 wherein the first E-shaped stator core (110A) and the second E-shaped stator core (110B) are in vertical symmetry, respectively, and
the first E-shaped stator core (110A) and the second E-shaped stator core (110B) are in symmetry.

8. The motor of claim 1, wherein a slot area (FxG) of the length (F) and the height (G)
is equal to a slot area (IxH) of the length (I) and the height (H).

9. The motor of claim 8, wherein the ratio (H/I) of the height (H) to the length (I) is larger than the ratio (G/F) of the height (G) to the length (F)

10. The motor of any one of claims 1 through 9, wherein a right-and-left width (B) of the first and second E-shaped stator core (110A, 110B) is longer than a vertical width (A) of the first and second E-shaped stator core (110A, 110B),
wherein the right-and-left width (B) is defined as a width in the tooth extension direction of the first E-shaped stator core (110A) and of the second E-shaped stator core (110B) and, wherein vertical width (A) is defined as a width in the yoke length direction of the E-shaped stator cores (110A, 110B), and
wherein a ratio (B/A) of the right-and-left width (B) to the vertical width (A) of the first and second E-shaped stator core (110A, 110B) is 0.55∼0.65.

11. The motor of any one of claims 1 through 10, wherein a width (C) of the outer tooth (112b) is equal to or longer than a width (E) of the yoke (11), and
a ratio (C/E) of the width (C) of the outer tooth (112b) to the width (E) of the yoke (11) is 0.8∼1;
wherein the width (C) is defined as a vertical width in the yoke length direction of the outer tooth (112b); and
wherein the width (E) is defined as a horizontal width in the tooth extension direction of the yoke (11)

12. The motor of any one of claims 1 through 11, wherein a width (D) of the center tooth (112a) is equal to or longer than a width (C) of the outer tooth (112b), and
a ratio (D/C) of the width (D) of the center tooth (112a) to the width (C) of the outer tooth (112b) is 0.95∼1
wherein the width (D) is defined as a vertical width in the yoke length direction of the center tooth (112a), and wherein width (C) is defined as a vertical width in the yoke length direction of the outer tooth (112b).

## Patentansprüche

1. Motor mit:
einem ersten E-förmigen Statorkern (110A); und
einem zweiten E-förmigen Statorkern (110B), der unabhängig vom ersten Statorkern (110A) vorgesehen ist,
wobei jeweils der erste und zweite E-förmige Statorkern (110A, 110B) aufweisen:
ein Joch (11), das sich in eine Jochlängsrichtung erstreckt;
einen Mittelzahn (112a), der sich in eine Zahnausdehnungsrichtung von einer Mitte des Jochs (11) erstreckt; und
zwei Außenzähne (112b), die sich von einem oberen bzw. unteren Ende des Jochs (11) in eine Zahnausdehnungsrichtung erstrecken, wobei die Außenzähne (112b) länger als der Mittelzahn (112a) sind,
wobei der Mittelzahn (112a) und die Außenzähne (112b) eine zylindrische Öffnung bilden, die zum Aufnehmen eines ringförmigen Rotorkerns (21) zwischen den ersten und den zweiten E-förmigen Statorkern (110A, 110B) geeignet sind, wobei sich der Rotor um eine Achse dreht, und
wobei ein Mittelzahn-Polschuh (113a) an einem Ende jedes Mittelzahns (112a) ausgebildet ist und sich vom Ende des Mittelzahns (112a) in beide entgegengesetzte Umfangsrichtungen erstreckt,
wobei ein Außenzahn-Polschuh (113b) an einem Ende jedes Außenzahns (112b) ausgebildet ist und sich vom Ende des Außenzahns (112b) in beide entgegengesetzte Umfangsrichtungen erstreckt,
wobei das Joch (11) senkrecht zur Zahnausdehnungsrichtung des Mittel- und Außenzahns (112a, 112b) ist, und
sich der Mittel- und Außenzahn (112a, 112b) linear erstrecken, und
ein Schlitz (114) in einer Außenfläche des Außenzahns (112b) zwischen dem Mittelzahn (112a) und dem Außenzahn (112b) ausgebildet ist,
**dadurch gekennzeichnet, dass**
ein Verhältnis (G/F) einer Höhe (G) zu einer Länge (F) 0,27∼0,33 beträgt,
wobei die Länge (F) als die Länge in die Zahnausdehnungsrichtung des Außenzahns (112b) zwischen dem Joch (11) und dem Polschuh (113b) definiert ist und die Höhe (G) als die Höhe in die Jochlängsrichtung einer Polausdehnung des Außenzahn-Polschuhs (113b) definiert ist, die sich vom Außenzahn (112b) zum Mittelzahn (112a) erstreckt,
und/oder
ein Verhältnis (H/I) einer Höhe (H) zu einer Länge (I) 0,55 -0,67 beträgt,
wobei die Länge (I) als die Länge in die Zahnausdehnungsrichtung des Mittelzahns (112a) zwischen dem Joch (11) und dem Polschuh (113a) definiert ist, und
die Höhe (H) als die Höhe in die Jochlängsrichtung einer Polausdehnung des Mittelzahn-Polschuhs (113a) definiert ist, die sich vom Mittelzahn (112a) zum Außenzahn (112b) erstreckt.

2. Motor nach Anspruch 1,
wobei der Außenzahn-Polschuh (113b) so ausgebildet ist, dass er einen Fernbereich, der sich in einem weiten Abstand von einem äußeren Ende des Außenzahns (112b) erstreckt und einen Nahbereich miteinander verbindet, der sich in einem kurzen Abstand von einem inneren Ende des Außenzahns (112b) erstreckt,
wobei der Fernbereich als eine Polausdehnung des Außenzahn-Polschuhs (113b) definiert ist, die sich von einem ersten Außenzahn (112b) zu einem zweiten Außenzahn (112b) des E-förmigen Statorkerns (110A, 110B) erstreckt, der dem ersten Außenzahn (112b) gegenüberliegt, und
wobei der Nahbereich als eine Polausdehnung des Mittelzahn-Polschuhs (113a) definiert ist, die sich vom Außenzahn (112b) zum Mittelzahn (112a) erstreckt.

3. Motor nach Anspruch 2, wobei ein Rotor (200) in einer Mitte des ersten und zweiten E-förmigen Statorkerns (110A, 110B) vorgesehen ist, und
eine Umfangslänge des Mittelzahn-Polschuhs (113a), der dem Rotor (200) gegenüberliegt, gleich einer Umfangslänge des Außenzahn-Polschuhs (113b) ist, der dem Rotor (200) gegenüberliegt.

4. Motor nach Anspruch 2 oder 3, wobei ein zwischen dem Fernbereich und dem Nahbereich ausgebildeter Winkel kleiner als 90 Grad ist, und
ein zwischen den Zähnen und dem Nahbereich ausgebildeter Winkel 90 Grad beträgt, und
ein zwischen den Zähnen und dem Fernbereich ausgebildeter Winkel kleiner als 180 Grad ist.

5. Motor nach einem der Ansprüche 2 bis 4, wobei ein Schlitz (114) zwischen dem Mittelzahn (112a) und dem Außenzahn (112b) ausgebildet ist, und
eine Schlitzöffnung (116) zwischen dem Mittelzahn-Polschuh (113a) und dem Außenzahn-Polschuh (113b) ausgebildet ist, und
eine Breite der Schlitzöffnung (116) in Umfangsrichtung kleiner als die Breiten (D, C) des Mittel- und Außenzahns (112a, 112b) in die Jochlängsrichtung ist.

6. Motor nach Anspruch 5, wobei einem Line, die eine Mitte der Schlitzöffnung (116) und eine Mitte des Motors miteinander verbindet, sich nicht mit einer Innenfläche des Jochs (11) überlappt, die den Schlitz (114) bildet.

7. Motor nach einem der Ansprüche 1 bis 6, wobei sich der erste E-förmigc Statorkern (110A) bzw. der zweite E-förmige Statorkern (110B) in vertikaler Symmetrie befinden, und
sich der erste E-förmige Statorkern (110A) und der zweite E-förmige Statorkern (110B) in Symmetrie befinden.

8. Motor nach Anspruch 1, wobei eine Schlitzfläche (FxG) der Länge (F) und der Höhe (G) gleich einer Schlitzfläche (IxH) der Länge (I) und der Höhe (H) ist.

9. Motor nach Anspruch 8, wobei das Verhältnis (H/I) der Höhe (H) zur Länge (I) größer als das Verhältnis (G/F) der Höhe (G) zur Länge (F) ist.

10. Motor nach einem der Ansprüche 1 bis 9, wobei eine Breite (B) von rechts nach links des ersten und zweiten E-förmigen Statorkerns (110A, 110B) länger als eine vertikale Breite (A) des ersten und zweiten E-förmigen Statorkerns (110A, 110B) ist,
wobei die Breite (B) von rechts nach links als eine Breite in die Zahnausdehnungsrichtung des ersten E-förmigen Statorkerns (110A) und des zweiten E-förmigen Statorkerns (110B) definiert ist und wobei die vertikale Breite (A) als eine Breite des E-förmigen Statorkerns (110A, 110B) in die Jochlängsrichtung definiert ist, und
wobei ein Verhältnis (B/A) der Breite (B) von rechts nach links zur vertikalen Breite (A) des ersten und zweiten E-förmigen Statorkerns (110A, 110B) 0,55∼0,65 beträgt.

11. Motor nach einem der Ansprüche 1 bis 10, wobei eine Breite (C) des Außenzahns (112b) gleich oder länger als eine Breite (E) des Jochs (11) ist, und
ein Verhältnis (C/E) der Breite (C) des Außenzahns (112b) zur Breite (E) des Jochs (11) 0,8∼1 beträgt;
wobei die Breite (C) als eine vertikale Breite des Außenzahns (112b) in die Jochlängsrichtung definiert ist; und
wobei die Breite (E) als eine horizontale Breite des Jochs (11) in die Zahnausdehnungsrichtung definiert ist.

12. Motor nach einem der Ansprüche 1 bis 11, wobei eine Breite (D) des Mittelzahns (112a) gleich oder länger als eine Breite (C) des Außenzahns (112b) ist, und
ein Verhältnis (D/C) der Breite (D) des Mittelzahns (112a) zur Breite (C) des Außenzahns (112b) 0,95∼1 beträgt,
wobei die Breite (D) als eine vertikale Breite in die Jochlängsrichtung des Mittelzahns (112a) definiert ist, und wobei die Breite (C) als eine vertikale Breite des Außenzahns (112b) in die Jochlängsrichtung definiert ist.

## Revendications

1. Moteur, comprenant :
un premier noyau de stator en forme de E (110A) ; et
un deuxième noyau de stator en forme de E (110B) prévu indépendamment du premier noyau de stator (110A),
où le premier et le deuxième noyaux de stator en forme de E (110A, 110B) comprennent chacun une culasse (11) s'étendant dans le sens de la longueur de culasse ;
une dent centrale (112a) s'étendant dans une direction d'extension de dent depuis le centre de la culasse (11) ; et
deux dents extérieures (112b) s'étendant dans une direction d'extension de dent depuis les extrémités supérieure et inférieure de la culasse (11), les dents extérieures (112b) étant plus longues que les dents centrales (112a),
où les dents centrales (112a) et les dents extérieures (112b) forment une ouverture cylindrique prévue pour recevoir un noyau de rotor de forme annulaire (21) entre le premier et le deuxième noyaux de stator en forme de E (110A, 110B), le rotor tournant autour d'un axe et,
où une pièce polaire (113a) de dent centrale est formée à une extrémité de chaque dent centrale (112a) et s'étend depuis l'extrémité de la dent centrale (112a) dans les deux directions circonférentielles opposées,
où une pièce polaire (113b) de dent extérieure est formée à une extrémité de chaque dent extérieure (112b) et s'étend depuis l'extrémité de la dent extérieure (112b) dans les deux directions circonférentielles opposées,
où la culasse (11) est perpendiculaire à la direction d'extension des dents centrales et des dents extérieures (112a, 112b), et
les dents centrales et les dents extérieures (112a, 112b) s'étendent linéairement, et une fente (114) est formée entre la dent centrale (112a) et la dent extérieure (112b) sur une surface extérieure de la dent extérieure (112b),
**caractérisé**
**en ce qu'**un rapport (G/F) entre une hauteur (G) et une longueur (F) est de 0,27∼0,33,
la longueur (F) étant définie en tant que longueur dans la direction d'extension de la dent extérieure (112b) entre la culasse (11) et la pièce polaire (113b) et la hauteur (G) étant définie en tant que hauteur dans le sens de la longueur de culasse d'une extension polaire de la pièce polaire (113b) de dent extérieure s'étendant depuis la dent extérieure (112b) vers la dent centrale (112a), et/ou
un rapport (H/I) entre une hauteur (H) et une longueur (I) est de 0,55∼0,67,
la longueur (I) étant définie en tant que longueur dans la direction d'extension de la dent centrale (112a) entre la culasse (11) et la pièce polaire (113a), et
la hauteur (H) étant définie en tant que la hauteur dans le sens de la longueur de culasse d'une extension polaire de la pièce polaire (113a) de dent centrale s'étendant depuis la dent centrale (112a) vers la dent extérieure (112b).

2. Moteur selon la revendication 1,
où la pièce polaire (113b) de dent extérieure est formée de manière à relier une surface de grande distance s'étendant sur une grande distance depuis une extrémité extérieure de la dent extérieure (112b) à une surface de faible distance s'étendant sur une faible distance depuis une extrémité intérieure de la dent extérieure (112b),
la surface de grande distance étant définie en tant qu'extension polaire de la pièce polaire (113b) de dent extérieure s'étendant depuis une première dent extérieure (112b) vers une deuxième dent extérieure (112b) du noyau de stator en forme de E (110A, 110B) faisant face à la première dent extérieure (112b), et la surface de faible distance étant définie en tant qu'extension polaire de la pièce polaire (113a) de dent centrale s'étendant depuis la dent extérieure (112b) vers la dent centrale (112a).

3. Moteur selon la revendication 2, où un rotor (200) est prévu au centre du premier et du deuxième noyau de stator en forme de E (110A, 110B), et
la longueur circonférentielle de la pièce polaire (113a) de dent centrale faisant face au rotor (200) est égale à la longueur circonférentielle de la pièce polaire (113b) de dent extérieure faisant face au rotor (200).

4. Moteur selon la revendication 2 ou la revendication 3, où un angle formé entre la surface de grande distance et la surface de faible distance est inférieur à 90 degrés, et
un angle formé entre les dents et la surface de faible distance est égal à 90 degrés, et un angle formé entre les dents et la surface de grande distance est inférieur à 180 degrés.

5. Moteur selon l'une des revendications 2 à 4, où une fente (114) est formée entre la dent centrale (112a) et la dent extérieure (112b), et
une ouverture (116) de fente est formée entre la pièce polaire (113a) de dent centrale et la pièce polaire (113b) de dent extérieure, et
une largeur dans la direction circonférentielle de l'ouverture (116) de fente est inférieure aux largeurs (D, C) dans le sens de la longueur de culasse des dents centrales et des dents extérieures (112a, 112b).

6. Moteur selon la revendication 5, où une ligne reliant le centre de l'ouverture (116) de fente et le centre du moteur n'est pas en chevauchement avec une surface intérieure de la culasse (11) formant la fente (114).

7. Moteur selon l'une des revendications 1 à 6, où le premier noyau de stator en forme de E (110A) et le deuxième noyau de stator en forme de E (110B) sont symétriques verticalement, et
le premier noyau de stator en forme de E (110A) et le deuxième noyau de stator en forme de E (110B) sont symétriques.

8. Moteur selon la revendication 1, où une surface de fente (FxG) de la longueur (F) et de la hauteur (G) est égale à une surface de fente (IxH) de la longueur (I) et de la hauteur (H).

9. Moteur selon la revendication 8, où le rapport (H/I) entre la hauteur (H) et la longueur (I) est supérieur au rapport (G/F) entre la hauteur (G) et la longueur (F).

10. Moteur selon l'une des revendications 1 à 9, où la largeur de gauche à droite (B) du premier et du deuxième noyaux de stator en forme de E (110A, 110B) est supérieure à la largeur verticale (A) du premier et du deuxième noyaux de stator en forme de E (110A, 110B),
la largeur de gauche à droite (B) étant définie en tant que largeur dans la direction d'extension de dent du premier noyau de stator en forme de E (110A) et du deuxième noyau de stator en forme de E (110B) et la largeur verticale (A) étant définie en tant que largeur dans le sens de la longueur de culasse des noyaux de stator en forme de E (110A, 110B), et
le rapport (B/A) entre la largeur de gauche à droite (B) et la largeur verticale (A) du premier et du deuxième noyaux de stator en forme de E (110A, 110B) est de 0,55∼ 0,65.

11. Moteur selon l'une des revendications 1 à 10, où la largeur (C) de la dent extérieure (112b) est égale ou supérieure à la largeur (E) de la culasse (11), et
le rapport (C/E) entre la largeur (C) de la dent extérieure (112b) et la largeur (E) de la culasse (11) est de 0,8∼1 ;
la largeur (C) étant définie en tant que largeur verticale dans le sens de la longueur de culasse de la dent extérieure (112b) ; et
la largeur (E) étant définie en tant que largeur horizontale dans la direction d'extension de dent de la culasse (11).

12. Moteur selon l'une des revendications 1 à 11, où la largeur (D) de la dent centrale (112a) est égale ou supérieure à la largeur (C) de la dent extérieure (112b), et
le rapport (D/C) entre la largeur (D) de la dent centrale (112a) et la largeur (C) de la dent extérieure (112b) est de 0,95∼1,
la largeur (D) étant définie en tant que largeur verticale dans le sens de la longueur de culasse de la dent centrale (112a), et
la largeur (C) étant définie en tant que largeur verticale dans le sens de la longueur de culasse de la dent extérieure (112b).
